# EUROPÄISCHE PATENTANMELDUNG

(11) **EP 1 892 442 A1**
(43) Veröffentlichungstag der Anmeldung: **27.02.2008**
(21) Anmeldenummer: 06017253.3
(22) Anmeldetag: 18.08.2006
(51) Int. Cl.: F16J 15/32, F01D 11/00

(54) **Bürstendichtung für eine Strömungsmaschine**

(71) Anmelder: SIEMENS AKTIENGESELLSCHAFT, 80333 München (DE)
(72) Erfinder: Die Erfindernennung liegt noch nicht vor

(57) **Zusammenfassung**

Eine Bürstendichtung (10) für eine Strömungsmaschine zum Abdichten eines Spaltes zwischen einem rotierenden und einem stehenden Bauteil der Strömungsmaschine, bei der elastisch biegsame Borsten (12) in mehreren, nebeneinander angeordneten Borstenreihen (28) vorgesehen sind, ist erfindungsgemäß dadurch gekennzeichnet, dass zwischen mindestens zwei Borstenreihen (28) eine Folie (30, 32) oder eine Scheibe angeordnet ist, welche sich in Längsrichtung der Borsten (12) erstreckt.

## Beschreibung

Die Erfindung betrifft eine Bürstendichtung für eine Strömungsmaschine zum Abdichten eines Spaltes zwischen einem rotierenden und einem stehenden Bauteil der Strömungsmaschine, bei der elastisch biegsame Borsten in mehreren, nebeneinander angeordneten Borstenreihen vorgesehen sind.

In Strömungsmaschinen mit rotierenden und stehenden Bauteilen werden Dichtelemente unterschiedlicher Bauart zur Abdichtung verschiedener Druckräume verwendet. Hierbei kommen zwischen den rotierenden und den stehenden Bauteilen insbesondere berührungslose Dichtungen (z. B. Labyrinthdichtungen) oder nachgiebige berührende Dichtelemente zum Einsatz. Zu nachgiebigen berührenden Dichtelementen werden unter anderem so genannte Bürstendichtungen gezählt, bei denen ein Paket von Borsten zur Abdichtung zwischen Räumen mit unterschiedlichen Drücken verwendet wird.

Während berührungslose Dichtungen zum Abdichten von Druckdifferenzen von einigen Millibar bis zu.mehreren hundert bar geeignet sind, ist der Verwendungsbereich von Bürstendichtungen selbst bei mehrstufiger Anordnung (mehrere Bürstendichtungen hintereinander) aufgrund des "Blow-Over-Effektes" und eines "Auffächerns" in Bezug auf die maximale Druckdifferenz begrenzt.

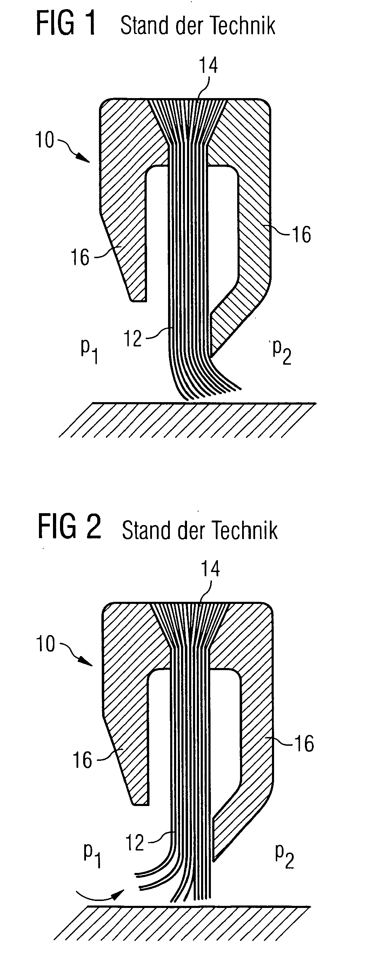

Der "Blow-Over-Effekt" ist in Fig. 1 durch eine Querschnittsdarstellung einer Bürstendichtung 10 gemäß dem Stand der Technik veranschaulicht. Bei dieser Bürstendichtung 10 sind Borsten 12 in mehreren Reihen angeordnet und in einem Grundkörper 14 befestigt. Der Grundkörper 14 ist an zwei gegenüberliegenden Seiten von je einem Führungsblech 16 eingefasst, von denen das in Fig. 1 rechts dargestellte Führungsblech 16 derart weit an den unteren Endbereich der Borsten 12 reicht, dass es die Borsten 12 dort abstützt. Bei einer entsprechend hohen Druckdifferenz "p₁ >> p₂ "an der Bürstendichtung 10 werden die Borsten 12 an diesem unteren Endbereich jedoch derart stark gebogen, dass Medium von dem in Fig. 1 linksseitigen Druckraum in den rechtsseitigen Druckraum überströmen kann.

In Fig. 2 ist das "Auffächern" einer Bürstendichtung 10 an einer Querschnittsdarstellung entsprechend der von Fig. 1 veranschaulicht. Beim "Auffächern" kommt es aufgrund einer ungünstigen Anströmung des unteren Endbereiches der Borsten 12 dazu, dass einzelne Borsten zum linksseitigen Druckraum hin aufbogen werden, sodass wiederum Medium aus diesem unter einem Druck p₁ stehenden Druckraum in den rechtsseitigen, unter einem niedrigeren Druck p₂ stehenden Druckraum gelangen kann.

Um die Leistungsfähigkeit bekannter Bürstendichtungen zu steigern, werden bei bisherigen Lösungen die einzelnen Borsten vergleichsweise dick ausgeführt, die einzelnen Borstenpakete durch ein Führungsblech bzw. einen Stützring gehalten (siehe Fig. 1 und 2, das rechte Führungsblech 16) und/oder das einzelne Borstenpaket insgesamt relativ breit bzw. dick ausgeführt.

Trotzdem sind der ertragbaren Druckdifferenz bekannter Bürstendichtungen weiterhin die oben genannten Grenzen gesetzt. Insbesondere können aufgrund des notwendigen Radialspiels zwischen den rotierenden und stehenden Bauteilen die Borsten mit einem Führungsblech bzw. einem Stützring nicht beliebig nah an einem gegenüberliegenden Bauteil abgestützt werden.

Es ist eine Aufgabe der vorliegenden Erfindung, eine Bürstendichtung der eingangs genannten Art dahingehend zu verbessern, dass bei einer damit ausgerüsteten Strömungsmaschine höhere Druckdifferenzen abgedichtet werden können.

Die Aufgabe ist erfindungsgemäß mit einer Bürstendichtung gemäß Anspruch 1 und einer Strömungsmaschine gemäß Anspruch 9 gelöst. Vorteilhafte Weiterbildungen der Erfindung sind in den abhängigen Ansprüchen definiert.

Die erfindungsgemäße Bürstendichtung für eine Strömungsmaschine zum Abdichten eines Spaltes zwischen einem rotierenden und einem stehenden Bauteil der Strömungsmaschine weist die eingangs genannten elastisch biegsamen Borsten in mehreren, nebeneinander angeordneten Borstenreihen auf. Zwischen mindestens zwei Borstenreihen ist darüber hinaus eine Folie oder eine Scheibe bzw. Membran angeordnet, welche sich in Längsrichtung der Borsten erstreckt.

Die Bürstendichtung gemäß der Erfindung weist also zwischen den einzelnen Borstenreihen seiner Borstenpakete mindestens eine Zwischenlage in Form einer Folie oder einer Scheibe auf. Die Scheibe kann dabei insbesondere ein dünnes Blech sein. Mit den derartigen erfindungsgemäßen Folien bzw. Scheiben wird erreicht, dass sich die einzelnen Borsten und erfindungsgemäßen Zwischenlagen gegenseitig stützen. Die Gefahr eines Umknickens von Borsten um die Kante eines Führungsbleches (siehe Fig. 1) oder eines Auffächerns von Borsten (siehe Fig. 2) ist erfindungsgemäß stark vermindert. Auf diese Weise ist die erfindungsgemäße Bürstendichtung auch für höhere Druckdifferenzen geeignet. Das Auffächern einzelner Borsten durch eine drallbehaftete Anströmung einer Bürstendichtung kann mit den erfindungsgemäßen Folien oder Scheiben insbesondere einströmseitig vermindert werden.

Um die erfindungsgemäße Folie oder Scheibe an der Büstendichtung kostengünstig anbringen und dauerhaft haltern zu können, ist es bevorzugt die Borsten mit einem Endbereich an einem Grundkörper ortsfest anzubringen und die Folie oder die Scheibe mit einem Randbereich ebenfalls mittels diesem Grundkörper zwischen den Borsten zu halten.

Die erfindungsgemäße Folie oder Scheibe ist bevorzugt aus Kunststoff und/oder Metall hergestellt. Mit derartigen Materialen können die gewünschten Stützeffekte je nach erforderlicher Betriebstemperatur der Bürstendichtung kostengünstig erzielt werden.

Darüber hinaus ist es erfindungsgemäß bevorzugt die Folie oder die Scheibe zumindest abschnittsweise perforiert und/oder zumindest abschnittsweise geschlitzt zu gestalten. Mit derartigen Bürstendichtungen kann der "Blow-Down-Effekt" der Bürstendichtung (d.h. das Schließen der Bürstendichtung durch radiale Druckkräfte auf das zugehörige Borstenpaket) aufrechterhalten werden.

Schließlich ist es erfindungsgemäß bevorzugt, die Folie oder die Scheibe hinsichtlich der Längserstreckung der Borsten genauso lang wie diese und/oder kürzer als diese zu gestalten. Ferner lässt sich die erfindungsgemäße Packung von Borsten mit zugehöriger Folie oder Scheibe beliebig oft stapeln und beliebig dick ausführen. Die Anzahl von Folien oder Scheiben sowie deren einzelnen Dicke kann je nach Anforderung an die Dichtsituation variiert werden. Die Folien oder Scheiben können zusammen mit den zugehörigen Borsten vergossen, eingespritzt, verschweißt, gewickelt und/oder geklemmt ausgeführt werden.

Nachfolgend wird ein Ausführungsbeispiel einer erfindungsgemäßen Bürstendichtung anhand der beigefügten schematischen Zeichnungen näher erläutert. Es zeigt:
Fig. 1 einen Querschnitt einer Bürstendichtung gemäß dem Stand der Technik zur obigen Erläuterung des "Blow-Over-Effektes",
Fig. 2 einen Querschnitt einer Bürstendichtung gemäß dem Stand der Technik zur obigen Erläuterung des "Auffächerns",
Fig. 3 einen Querschnitt und darunter eine teilweise perspektivische Ansicht eines Ausführungsbeispiels einer Bürstendichtung gemäß dem Stand der Technik, welches jenem der Fig. 1 und 2 entspricht,
Fig. 4 einen Querschnitt eines weiteren Ausführungsbeispiels einer Bürstendichtung gemäß dem Stand der Technik,
Fig. 5 einen Querschnitt und darunter eine teilweise perspektivische Ansicht eines Ausführungsbeispiels einer erfindungsgemäßen Bürstendichtung, welche auf einer Bürstendichtung gemäß Fig. 3 basiert und
Fig. 6 eine Querschnitt eines weiteren Ausführungsbeispiels einer erfindungsgemäßen Bürstendichtung, welche auf einer Bürstendichtung gemäß Fig. 4 basiert.

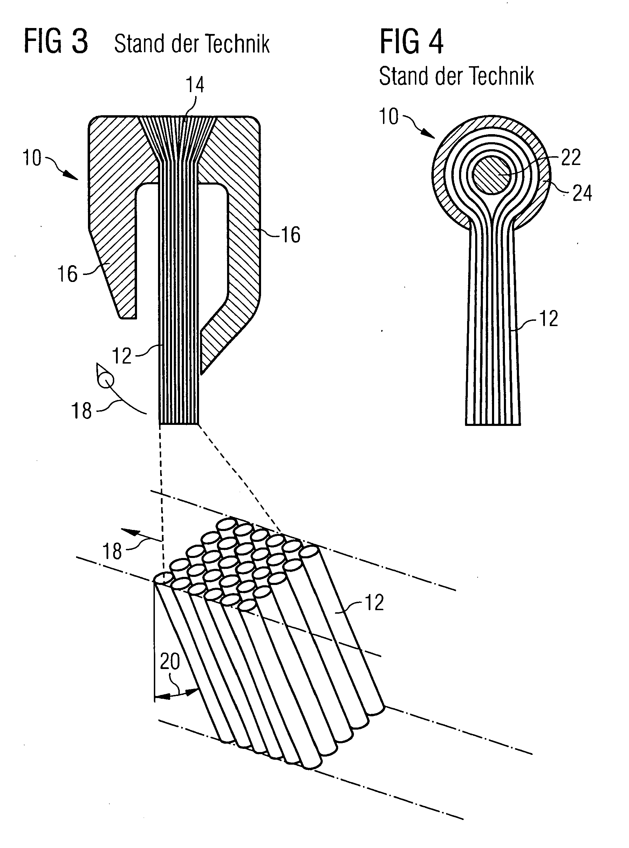

In Fig. 3 ist eine Bürstendichtung 10 des Standes der Technik veranschaulicht, welche sich im Wesentlichen parallel erstreckende Borsten 12 aufweist, die zusammen ein Borstenpaket bilden. Die Borsten 12 sind in einen Grundkörper 14 eingegossen, der sich zwischen zwei Führungsblechen 16 befindet. Die Führungsbleche 16 erstrecken sich einzeln in Längsrichtung der Borsten 12, wobei das bezogen auf Fig. 3 rechtsseitige Führungsblech 16 mit seinem unteren Endbereich in Richtung zu den Borsten 12 gekrümmt ist und die Borsten 12 an deren unteren Endbereich abstützt. Beim Rotieren der derartigen Bürstendichtung 10 in Richtung eines Pfeils 18 erfahren die bezogen auf Fig. 3 unteren Endbereiche der Borsten 12 einen Reibungswiderstand an einem (in den Fig. 3 bis 6 jeweils nicht dargestellten) gegenüberliegenden stehenden Bauteil, und die Borsten 12 werden dadurch entgegen ihrer Hauptbewegungsrichtung um einen Winkel 20 gekrümmt.

In Fig. 4 ist ein Ausführungsbeispiel einer Bürstendichtung 10 gemäß dem Stand der Technik veranschaulicht, bei dem Borsten 12 um einen zentralen Draht 22 gelegt und außenseitig von einer im Querschnitt im wesentlichen kreisförmigen Schale 24 umfasst sind. Die Borsten 12 ragen aus dieser Schale 24 bezogen auf Fig. 4 nach unten in Richtung auf ein (nicht dargestelltes) stehendes Bauteil heraus.

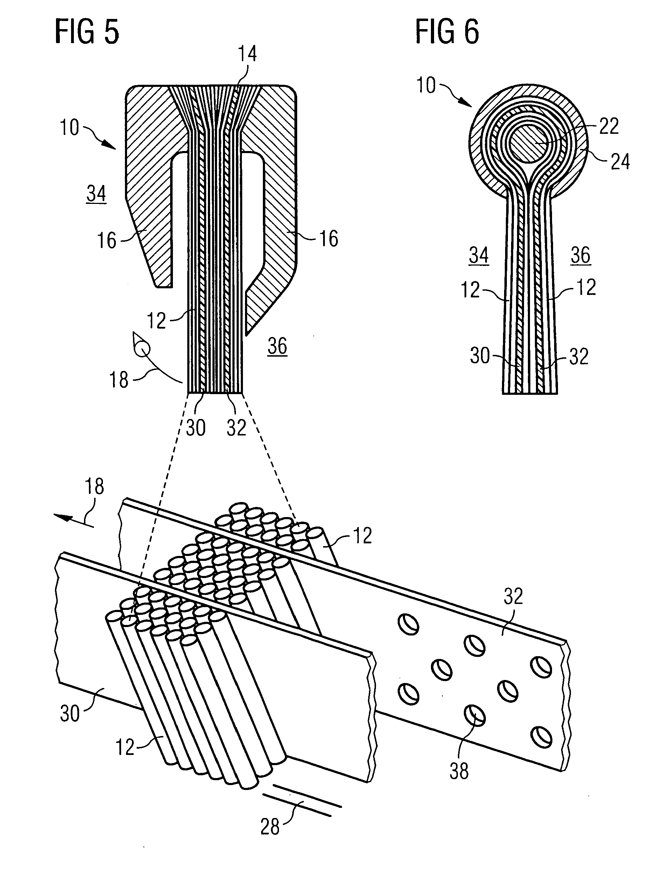

In Fig. 5 ist ein Ausführungsbeispiel einer Bürstendichtung 10 gemäß der Erfindung veranschaulicht, welche ebenfalls Borsten 12, einen Grundkörper 14 sowie zwei Führungsbleche 16 aufweist. Die Bürstendichtung 10 rotiert ebenfalls in Richtung eines Pfeils 18. Die Borsten 12 sind dabei im wesentlich parallel zueinander in Borstenreihen 28 angeordnet und zwischen diesen Borstenreihen 28 befinden sich insgesamt zwei Folien 30 und 32. Die dabei einem Druckraum 34 mit vergleichsweise niedrigem Druck zugewandte Folie 30 ist in ihrer Folienfläche geschlossen ausgebildet. Hingegen ist die Folie 32, welche einen Druckraum 36 mit vergleichsweise hohem Druck zugewandt ist, mittels Öffnungen 38 perforiert ausgestaltet.

In Fig. 6 ist ein weiteres Ausführungsbeispiel einer erfindungsgemäßen Bürstendichtung 10 dargestellt, welches hinsichtlich Borsten 12, einem Draht 22 und einer Schale 24 wie das in Fig. 4 dargestellte Ausführungsbeispiel des Standes der Technik gestaltet ist. Zwischen den um den Draht 22 gelegten Borsten 12 befindet sich bei dem Ausführungsbeispiel gemäß Fig. 6 jedoch ferner eine Folie 30, sodass sich im Bereich der aus der Schale 24 herausragenden Borsten wiederum die in Fig. 5 unten perspektivisch veranschaulichte Schichtung von Borsten 12 und Folie/n 30 bzw. 32 ergibt.

## Patentansprüche

1. Bürstendichtung (10) für eine Strömungsmaschine, zum Abdichten eines Spaltes zwischen einem rotierenden und einem stehenden Bauteil der Strömungsmaschine, bei der elastisch biegsame Borsten (12) in mehreren, nebeneinander angeordneten Borstenreihen (28) vorgesehen sind,
**dadurch gekennzeichnet, dass** zwischen mindestens zwei Borstenreihen (28) eine Folie (30, 32) oder eine Scheibe angeordnet ist, welche sich in Längsrichtung der Borsten (12) erstreckt.

2. Bürstendichtung nach Anspruch 1,
**dadurch gekennzeichnet, dass** die Borsten (12) mit einem Endbereich an einem Grundkörper (14) ortsfest angebracht sind und die Folie (30, 32) oder die Scheibe mit einem Randbereich ebenfalls mit diesem Grundkörper (14) zwischen den Borsten (12) gehalten ist.

3. Bürstendichtung nach Anspruch 1 oder 2,
**dadurch gekennzeichnet, dass** die Folie (30, 32) oder die Scheibe aus Kunststoff hergestellt ist.

4. Bürstendichtung nach einem der Ansprüche 1 bis 3,
**dadurch gekennzeichnet, dass** die Folie (30, 32) oder die Scheibe aus Metall hergestellt ist.

5. Bürstendichtung nach einem der Ansprüche 1 bis 4,
**dadurch gekennzeichnet, dass** die Folie (32) oder die Scheibe zumindest abschnittsweise perforiert gestaltet ist.

6. Bürstendichtung nach einem der Ansprüche 1 bis 5,
**dadurch gekennzeichnet, dass** die Folie oder die Scheibe zumindest abschnittsweise geschlitzt gestaltet ist.

7. Bürstendichtung nach einem der Ansprüche 1 bis 6,
**dadurch gekennzeichnet, dass** die Folie (30, 32) oder die Scheibe hinsichtlich der Längserstreckung der Borsten (12) genauso lang wie diese gestaltet ist.

8. Bürstendichtung nach einem der Ansprüche 1 bis 7,
**dadurch gekennzeichnet, dass** die Folie (30, 32) oder die Scheibe hinsichtlich der Längserstreckung der Borsten (12) kürzer als diese gestaltet ist.

9. Strömungsmaschine mit einer Bürstendichtung (10) nach einem der Ansprüche 1 bis 8.
